(19) **Europäisches Patentamt / European Patent Office / Office européen des brevets**

(11) **EP 4 232 680 B1**

(12) **FASCICULE DE BREVET EUROPEEN**

(45) Date de publication et mention de la délivrance du brevet:
**19.11.2025 Bulletin 2025/47**

(21) Numéro de dépôt: **21799036.5**

(22) Date de dépôt: **25.10.2021**

(51) Classification Internationale des Brevets (IPC):
**E06B 9/68** *(2006.01)* **E06B 9/72** *(2006.01)*

(52) Classification Coopérative des Brevets (CPC):
**E06B 9/68; E06B 9/72; H02J 7/0063;**
E06B 2009/2476; H02J 7/35

(86) Numéro de dépôt international:
**PCT/EP2021/079574**

(87) Numéro de publication internationale:
**WO 2022/090174 (05.05.2022 Gazette 2022/18)**

(54) **PROCÉDÉ DE COMMANDE EN FONCTIONNEMENT D'UN DISPOSITIF D'OCCULTATION ET DISPOSITIF D'OCCULTATION ASSOCIÉ**

VERFAHREN ZUR STEUERUNG DES BETRIEBS EINER BESCHATTUNGSVORRICHTUNG UND ZUGEHÖRIGE BESCHATTUNGSVORRICHTUNG

METHOD FOR CONTROLLING THE OPERATION OF A SHADING DEVICE, AND ASSOCIATED SHADING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2020 FR 2010953**

(43) Date de publication de la demande:
**30.08.2023 Bulletin 2023/35**

(73) Titulaire: **Somfy Activites SA**
**74300 Cluses (FR)**

(72) Inventeurs:
• **BRUNO, Serge**
  **74300 Cluses (FR)**
• **FAURE, David**
  **74300 Cluses (FR)**
• **ROUSSEAU, Fabien**
  **74300 Cluses (FR)**
• **MUGNIER, David**
  **74300 Cluses (FR)**
• **TINE, Damien**
  **74300 Cluses (FR)**
• **BOSSE, Ben**
  **74300 Cluses (FR)**

(74) Mandataire: **Lavoix**
  **62, rue de Bonnel**
  **69448 Lyon Cedex 03 (FR)**

(56) Documents cités:
FR-A1- 3 093 124    US-A- 5 990 646
US-A1- 2015 159 433

## Description

La présente invention concerne un procédé de commande en fonctionnement d'un dispositif d'occultation.

La présente invention concerne également un dispositif d'occultation adapté à mettre en œuvre ce procédé de commande.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, un store, une porte, une grille, un rideau ou tout autre matériel équivalent, appelé par la suite écran.

On connaît déjà le document JPH 08 281 62 A qui décrit un procédé de commande en fonctionnement d'un dispositif d'occultation. Le dispositif d'occultation comprend un écran et un dispositif d'entraînement motorisé. Le dispositif d'entraînement motorisé comprend un actionneur électromécanique, une unité électronique de contrôle et un dispositif d'alimentation en énergie électrique. L'actionneur électromécanique est configuré pour entraîner en déplacement l'écran, entre une première position de fin de course et une deuxième position de fin de course. L'actionneur électromécanique comprend un moteur électrique et un arbre de sortie.

Le procédé comprend une étape d'exécution d'un déplacement de l'écran par activation électrique de l'actionneur électromécanique. Le déplacement de l'écran est exécuté initialement à une consigne de vitesse de rotation nominale de l'arbre de sortie de l'actionneur électromécanique.

Cependant, ce dispositif d'occultation présente l'inconvénient que le dispositif d'alimentation en énergie électrique est formé par un réseau d'alimentation en énergie électrique du secteur. L'unité électronique de contrôle et le moteur électrique sont alimentés en énergie électrique au moyen du réseau d'alimentation en énergie électrique du secteur.

En outre, ce procédé présente la particularité de déterminer une valeur d'une tension de sortie d'une batterie d'un dispositif de détection d'obstacle ou d'un point de commande, de comparer cette valeur de la tension de sortie, déterminée lors de l'étape de détermination, par rapport à une valeur d'un seuil prédéterminé, puis en fonction du résultat, obtenu lors de l'étape de comparaison, de diminuer la consigne de vitesse de rotation de l'arbre de sortie de l'actionneur électromécanique si la valeur de la tension de sortie, déterminée lors de l'étape de détermination, est inférieure à la valeur du seuil prédéterminé.

Ainsi, ce procédé permet d'informer l'utilisateur que la tension de sortie de la batterie du dispositif de détection d'obstacle ou du point de commande est inférieure à la valeur du seuil prédéterminé et que celle-ci doit être remplacée.

Par conséquent, ce procédé n'est pas prévu pour adapter la vitesse de rotation de l'arbre de sortie de l'actionneur électromécanique en fonction d'une donnée représentative du fonctionnement du dispositif d'entraînement motorisé au cours du déplacement de l'écran.

Ce procédé ne permet donc pas d'empêcher un dépassement d'une puissance donnée pour chacun des éléments de stockage d'énergie d'une batterie destinée à alimenter en énergie électrique le moteur électrique de l'actionneur électromécanique et l'unité électronique de contrôle du dispositif d'entraînement motorisé.

On connaît également le document US 2015/0159433 A1 qui décrit un procédé de commande en fonctionnement d'un dispositif d'occultation. Le dispositif d'occultation comprend un écran et un dispositif d'entraînement motorisé. Le dispositif d'entraînement motorisé comprend un actionneur électromécanique, une unité électronique de contrôle et un dispositif d'alimentation en énergie électrique. L'actionneur électromécanique est configuré pour entraîner en déplacement l'écran, entre une première position de fin de course et une deuxième position de fin de course, et inversement. L'actionneur électromécanique comprend un moteur électrique. Le dispositif d'entraînement motorisé comprend deux arbres de sortie. Le dispositif d'alimentation en énergie électrique comprend une batterie. La batterie comprend une pluralité d'éléments de stockage d'énergie. L'unité électronique de contrôle et le moteur électrique sont alimentés en énergie électrique au moyen de la batterie. L'unité électronique de contrôle comprend un dispositif de mesure. Le dispositif de mesure est configuré pour mesurer une tension d'entrée de la batterie. Le procédé comprend une étape d'exécution d'un déplacement de l'écran par activation électrique de l'actionneur électromécanique, une étape de détermination d'une valeur d'une amplitude de la tension batterie, au moyen du dispositif de mesure, au cours du déplacement de l'écran, lors de l'étape d'exécution, une étape de comparaison de la valeur de l'amplitude de la tension batterie, déterminée lors de l'étape de détermination, par rapport à une valeur d'un unique seuil prédéterminé. Si la valeur de l'amplitude de la tension batterie, déterminée lors de l'étape de détermination, est inférieure à la valeur de l'unique seuil prédéterminé, le procédé met en œuvre une étape de diminution de la consigne de vitesse de rotation de l'arbre de sortie de l'actionneur électromécanique.

On connaît également les documents FR 2 894 278 A1 et FR 3 093 124 A1 qui décrivent respectivement un dispositif d'occultation. Le dispositif d'occultation comprend un écran et un dispositif d'entraînement motorisé. Le dispositif d'entraînement motorisé comprend un actionneur électromécanique, une unité électronique de contrôle et un dispositif d'alimentation en énergie électrique. L'actionneur électromécanique est configuré pour entraîner en déplacement l'écran, entre une première position de fin de course et une deuxième position de fin de course, et inversement. L'actionneur électromécanique comprend un moteur électrique. Le dispositif d'alimentation en énergie électrique comprend une batterie. La batterie comprend une pluralité d'éléments de stockage d'énergie. L'unité électronique de contrôle et le moteur électrique sont alimentés en énergie électrique au moyen de la batterie. Un déplacement de l'écran peut être exécuté par activation électrique de l'actionneur électromécanique.

Cependant, ce document est muet concernant une adaptation de la vitesse de rotation d'un arbre de sortie de l'actionneur électromécanique en fonction d'une donnée représentative du fonctionnement du dispositif d'entraînement motorisé au cours du déplacement de l'écran.

La présente invention a pour but de résoudre les inconvénients précités et de proposer un procédé de commande en fonctionnement d'un dispositif d'occultation, ainsi qu'un dispositif d'occultation, permettant d'empêcher un dépassement d'une puissance donnée pour chacun des éléments de stockage d'énergie d'une batterie destinée à alimenter en énergie électrique un moteur électrique d'un actionneur électromécanique et une unité électronique de contrôle d'un dispositif d'entraînement motorisé.

A cet égard, la présente invention vise, selon un premier aspect, un procédé de commande en fonctionnement d'un dispositif d'occultation,

le dispositif d'occultation comprenant au moins :

- un écran, et
- un dispositif d'entraînement motorisé,

le dispositif d'entraînement motorisé comprenant au moins :

- un actionneur électromécanique, l'actionneur électromécanique étant configuré pour entraîner en déplacement l'écran, entre une première position de fin de course et une deuxième position de fin de course, et inversement,
- une unité électronique de contrôle, et
- un dispositif d'alimentation en énergie électrique,

l'actionneur électromécanique comprenant au moins :

- un moteur électrique, et
- un arbre de sortie,

le dispositif d'alimentation en énergie électrique comprend au moins :

- une batterie, la batterie comprenant une pluralité d'éléments de stockage d'énergie, l'unité électronique de contrôle et le moteur électrique étant alimentés en énergie électrique au moyen de la batterie,

l'unité électronique de contrôle comprenant au moins :

- un dispositif de mesure, le dispositif de mesure étant configuré pour mesurer une grandeur représentative du fonctionnement du dispositif d'entraînement motorisé.

Le procédé comprend au moins les étapes suivantes :

- exécution d'un déplacement de l'écran par activation électrique de l'actionneur électromécanique,
- détermination d'au moins une valeur d'une donnée, au moyen du dispositif de mesure, représentative du fonctionnement du dispositif d'entraînement motorisé au cours du déplacement de l'écran, lors de l'étape d'exécution, la donnée étant la puissance consommée par l'actionneur électromécanique ou le couple délivré par l'actionneur électromécanique au cours du déplacement de l'écran, lors de l'étape d'exécution,
- comparaison de la valeur de la donnée, déterminée lors de l'étape de détermination, par rapport à au moins une valeur d'un premier seuil prédéterminé,
- en fonction du résultat, obtenu lors de l'étape de comparaison, diminution de la consigne de vitesse de rotation de l'arbre de sortie de l'actionneur électromécanique si la valeur de la donnée, déterminée lors de l'étape de détermination, atteint ou dépasse la valeur du premier seuil prédéterminé, de sorte à réduire une puissance électrique consommée par l'actionneur électromécanique provenant de la batterie, ou maintien de la consigne de vitesse de rotation de l'arbre de sortie de l'actionneur électromécanique tant que la valeur de la donnée, déterminée lors de l'étape de détermination, est inférieure à la valeur du premier seuil prédéterminé.

L'étape de détermination, l'étape de comparaison et l'étape de diminution de la consigne de vitesse de rotation de l'arbre de sortie de l'actionneur électromécanique sont mises en œuvre de manière itérative jusqu'à l'atteinte d'une valeur d'un deuxième seuil prédéterminé. En outre, la valeur du deuxième seuil prédéterminé est une valeur d'un seuil prédéterminé de vitesse.

Ainsi, le procédé permet de commander l'actionneur électromécanique de manière optimale en fonction de la vitesse de l'arbre de sortie, sans dépasser une puissance donnée pour chacun des éléments de stockage d'énergie de la batterie destinée à alimenter en énergie électrique le moteur électrique de l'actionneur électromécanique et l'unité électronique de contrôle du dispositif d'entraînement motorisé.

De cette manière, le procédé permet de garantir une durée de vie de la batterie, d'optimiser un dimensionnement de la batterie et, plus particulièrement, d'optimiser le nombre et la capacité de stockage d'énergie des éléments de stockage d'énergie de la batterie.

En outre, un tel procédé peut permettre de minimiser le bruit du dispositif d'entraînement motorisé et, plus particulièrement, du dispositif d'occultation lors de l'activation électrique de l'actionneur électromécanique.

Par ailleurs, un tel procédé permet d'adapter automatiquement le fonctionnement de l'actionneur électromécanique en fonction d'une donnée représentative du fonctionnement du dispositif d'entraînement motorisé au cours du déplacement de l'écran et, plus particulièrement, sa puissance consommée.

Le procédé peut permettre ainsi de s'affranchir d'un apprentissage, au cours d'un ou plusieurs déplacements précédents de l'écran, de la variation de la donnée représentative du fonctionnement du dispositif d'entraînement motorisé. Ceci évite de devoir déterminer une consigne spécifique de vitesse de rotation de l'arbre de sortie de l'actionneur électromécanique, cette consigne spécifique étant différente d'une consigne de vitesse de rotation nominale, au moins lors d'une phase de démarrage de l'actionneur électromécanique.

Selon une caractéristique avantageuse de l'invention, l'étape de détermination, l'étape de comparaison et l'étape de diminution ou l'étape de maintien sont mises en œuvre de manière itérative selon une période de temps prédéterminée.

Selon une autre caractéristique avantageuse de l'invention, suite à l'étape de diminution, si la valeur de la donnée, déterminée lors de l'étape de détermination, est inférieure à la valeur du premier seuil prédéterminé, la consigne de vitesse de rotation de l'arbre de sortie de l'actionneur électromécanique est maintenue à la valeur du deuxième seuil prédéterminé.

En variante, suite à l'atteinte de la valeur du deuxième seuil prédéterminé de vitesse, le procédé met en œuvre une étape d'augmentation de la consigne de vitesse de rotation de l'arbre de sortie de l'actionneur électromécanique.

En variante, dans le cas où la donnée, déterminée lors de l'étape de détermination, atteint ou dépasse la valeur du premier seuil prédéterminé, au cours d'un déplacement de l'écran, mis en œuvre lors de l'étape d'exécution, le procédé met en œuvre une étape de modification de la consigne de vitesse de rotation de l'arbre de sortie de l'actionneur électromécanique, de sorte à adapter la valeur de la consigne de vitesse de rotation de l'arbre de sortie de l'actionneur électromécanique lors d'un déplacement de l'écran suivant, mis en œuvre lors d'une nouvelle étape d'exécution.

Selon une autre caractéristique avantageuse de l'invention, le procédé comprend, en outre, une étape de sélection de la valeur du premier seuil prédéterminé parmi une pluralité de valeurs, en fonction d'au moins une condition.

Selon une autre caractéristique avantageuse de l'invention, le procédé est mis en œuvre dans le cas de l'exécution d'un déplacement de montée de l'écran.

La présente invention vise, selon un deuxième aspect, un dispositif d'occultation,

le dispositif d'occultation comprenant au moins :

- un écran, et
- un dispositif d'entraînement motorisé,

le dispositif d'entraînement motorisé comprenant au moins :

- un actionneur électromécanique, l'actionneur électromécanique étant configuré pour entraîner en déplacement l'écran, entre une première position de fin de course et une deuxième position de fin de course, et inversement,
- une unité électronique de contrôle, et
- un dispositif d'alimentation en énergie électrique,

l'actionneur électromécanique comprenant au moins :

- un moteur électrique, et
- un arbre de sortie,

le dispositif d'alimentation en énergie électrique comprenant au moins :

- une batterie, la batterie comprenant une pluralité d'éléments de stockage d'énergie, l'unité électronique de contrôle et le moteur électrique étant alimentés en énergie électrique au moyen de la batterie,

l'unité électronique de contrôle comprenant au moins :

- un dispositif de mesure, le dispositif de mesure étant configuré pour mesurer une grandeur représentative du fonctionnement du dispositif d'entraînement motorisé.

L'unité électronique de contrôle est configurée pour mettre en œuvre le procédé selon l'invention et tel que mentionné ci-dessus.

Ce dispositif d'occultation présente des caractéristiques et avantages analogues à ceux décrits précédemment, en relation avec le procédé de commande en fonctionnement d'un dispositif d'occultation selon l'invention.

D'autres particularités et avantages de l'invention apparaîtront encore dans la description ci-après, faite en référence aux dessins annexés, donnés à titre d'exemples non limitatifs :

[Fig 1] la figure 1 est une vue schématique en coupe transversale d'une installation comprenant un dispositif d'occultation conforme à l'invention ;

[Fig 2] la figure 2 est une vue schématique en perspective de l'installation illustrée à la figure 1 ;

[Fig 3] la figure 3 est une vue en coupe schématique d'un actionneur électromécanique de l'installation illustrée aux figures 1 et 2, selon un plan de coupe passant par un axe de rotation d'un arbre de sortie de l'actionneur électromécanique ; et

[Fig 4] la figure 4 est un schéma blocs d'un algorithme d'un procédé conforme à l'invention, de commande en fonctionnement du dispositif d'occultation illustré aux figures 1 à 3.

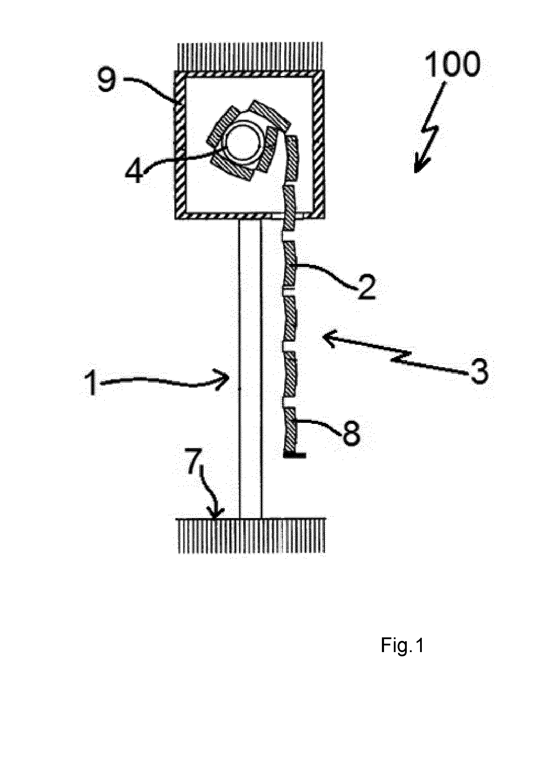

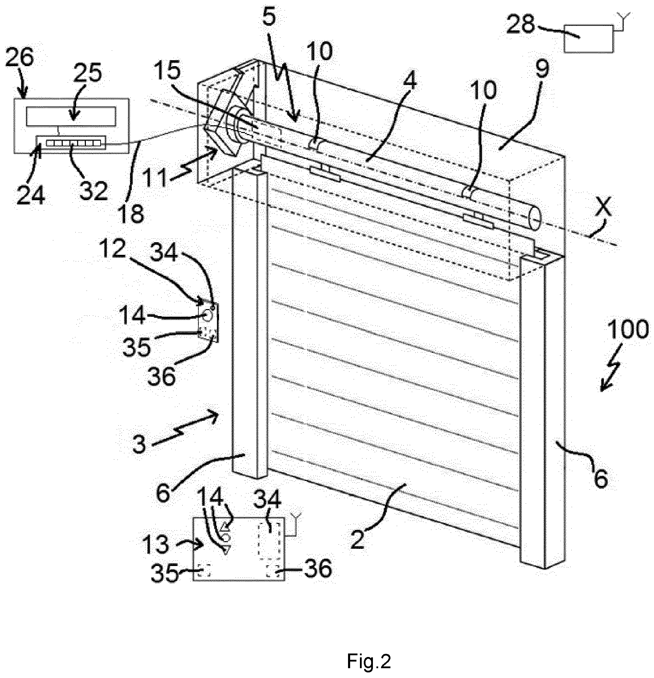

On décrit tout d'abord, en référence aux figures 1 et 2, une installation 100, comprenant un dispositif de fermeture, d'occultation ou de protection solaire 3 conforme à l'invention, installée dans un bâtiment comportant une ouverture 1, fenêtre ou porte. Cette installation 100 est équipée d'un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

Ici, l'installation 100 comprend le dispositif d'occultation 3.

On décrit, en référence aux figures 1 à 3, un volet roulant conforme à l'invention.

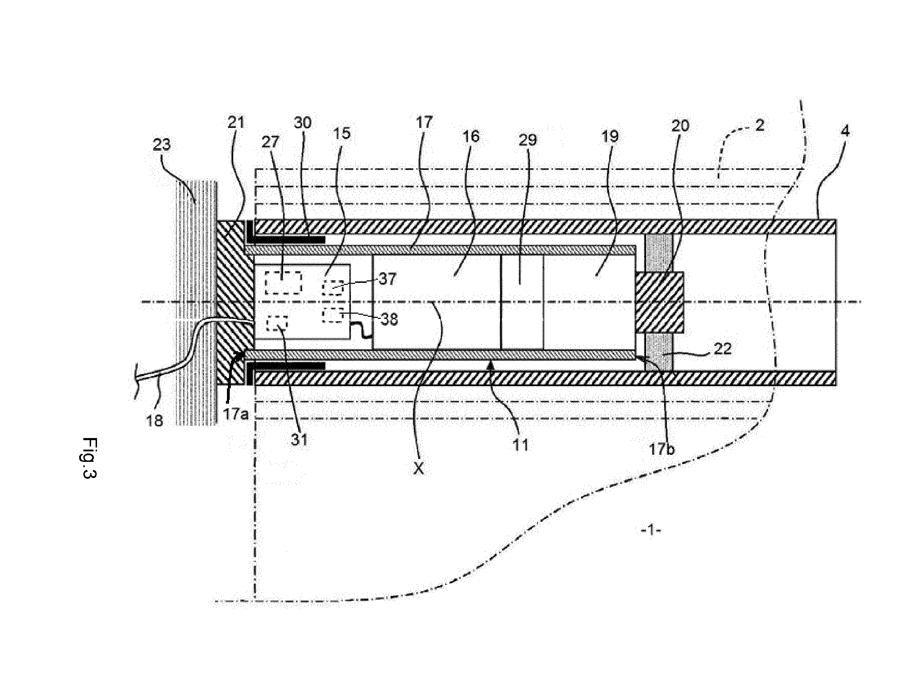

Le dispositif d'occultation 3 comprend un dispositif d'entraînement motorisé 5. Le dispositif d'entraînement motorisé 5 comprend un actionneur électromécanique 11 illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdcH, et une position fermée, correspondant à la position déroulée et pouvant également être appelée deuxième position de fin de course ou position de fin de course basse FdcB.

Ainsi, l'actionneur électromécanique 11 est configuré pour entraîner, autrement dit entraîne, en déplacement l'écran 2, entre la première position de fin de course FdCH et la deuxième position de fin de course FdCB.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

On décrit à présent, plus en détail et en référence à la figure 3, l'actionneur électromécanique 11 appartenant à l'installation 100 des figures 1 et 2.

L'actionneur électromécanique 11 comprend un moteur électrique 16. Le moteur électrique 16 comprend un rotor et un stator, non représentés, positionnés de manière coaxiale autour de l'axe de rotation X du tube d'enroulement 4 en configuration montée du dispositif d'entraînement motorisé 5.

Ici, le moteur électrique 16 est de type sans balais à commutation électronique, appelé également « BLDC » (acronyme du terme anglais BrushLess Direct Current) ou « synchrone à aimants permanents ».

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur du bâtiment ou sur une face d'un cadre dormant d'une fenêtre ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 15, en particulier du microcontrôleur 31. Le capteur et/ou l'horloge peuvent être intégrés à l'unité de commande locale 12 ou à l'unité de commande centrale 13.

Avantageusement, l'actionneur électromécanique 11 comprend un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

L'actionneur électromécanique 11 comprend, en outre, un arbre de sortie 20.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Ici et comme visible à la figure 3, dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, dans la configuration assemblée de l'actionneur électromécanique 11, le frein 29 est configuré pour être disposé, autrement dit est disposé, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, dans la configuration assemblée de l'actionneur électromécanique 11.

Avantageusement, l'actionneur électromécanique 11 peut également comprendre un dispositif de détection de fin de course et/ou d'obstacle, non représenté, pouvant être mécanique ou électronique.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé « tête d'actionneur ». Le support de couple 21 est disposé au niveau de la première extrémité 17a du carter 17 de l'actionneur électromécanique 11, dans la configuration assemblée de l'actionneur électromécanique 11.

Le support de couple 21 permet d'assurer la reprise des efforts exercés par l'actionneur électromécanique 11, en particulier le couple exercé par l'actionneur électromécanique 11, par la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 de l'actionneur électromécanique 11 permet de fixer l'actionneur électromécanique 11 sur un bâti 23, en particulier à une joue du coffre 9.

Avantageusement, le support de couple 21 est en saillie au niveau de la première extrémité 17a du carter 17 de l'actionneur électromécanique 11, en particulier l'extrémité 17a du carter 17 recevant la couronne 30. La couronne 30 constitue, autrement dit est configurée pour constituer, un palier de guidage en rotation du tube d'enroulement 4, dans la configuration assemblée du dispositif d'occultation 3.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre un partie du support de couple 21 et le couvercle.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, dans la configuration assemblée du dispositif d'occultation 3. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Le dispositif d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Le dispositif d'alimentation en énergie électrique 26 comprend au moins une batterie 24. L'unité électronique de contrôle 15 et le moteur électrique 16 et, plus généralement, l'actionneur électromécanique 11 sont alimentés, autrement dit configurés pour être alimentés, en énergie électrique au moyen de la batterie 24.

La batterie 24 est configurée pour fournir, autrement dit fournit, une puissance électrique à l'actionneur électromécanique 11, en particulier au moteur électrique 16 et à l'unité électronique de contrôle 15.

Avantageusement, la batterie 24 peut être disposée au niveau du coffre 9 du dispositif d'occultation 3.

Ici et comme illustré à la figure 2, la batterie 24 est disposée à l'extérieur du coffre 9.

En variante, non représentée, la batterie 24 peut être disposée à l'intérieur du coffre 9, à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici et tel qu'illustré à la figure 3, la batterie 24 est reliée électriquement directement à l'unité électronique de contrôle 15, par le câble d'alimentation électrique 18.

La batterie 24 est, de préférence, de type rechargeable.

La batterie 24 comprend une pluralité d'éléments de stockage d'énergie 32. Les éléments de stockage d'énergie 32 de la batterie 24 peuvent être, notamment, des accumulateurs rechargeables ou encore des piles.

Avantageusement, le dispositif d'alimentation en énergie électrique 26 comprend, en outre, au moins une source d'alimentation en énergie électrique externe 25, telle qu'illustrée à la figure 2, en particulier un panneau photovoltaïque.

Avantageusement, le dispositif d'entraînement motorisé 5 et, en particulier, l'unité électronique de contrôle 15, comprend des éléments de chargement configurés pour charger la batterie 24 à partir de l'énergie électrique fournie par la source d'alimentation en énergie électrique externe 25. Dans ce cas, le courant circule entre les composants 15, 24 et 25 à travers une liaison filaire, non représentée, pouvant être distincte du câble d'alimentation en énergie électrique 18.

Ainsi, la batterie 24 est alimentée en énergie électrique, autrement dit est configurée pour être alimentée en énergie électrique, au moyen de la source d'alimentation en énergie électrique externe 25, en particulier par le panneau photovoltaïque.

Ici et comme illustré à la figure 2, l'unité électronique de contrôle 15 comprend une seule carte électronique. En outre, la carte électronique est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

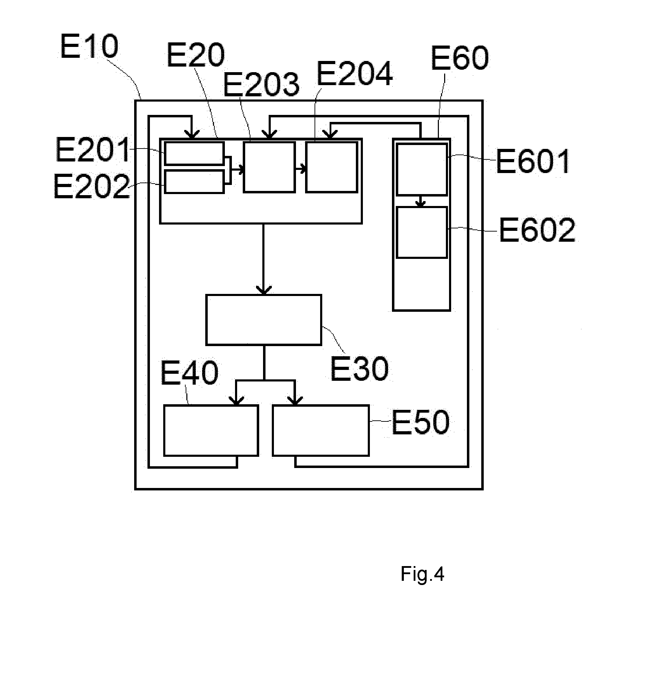

On décrit à présent, en référence à la figure 4, un mode d'exécution d'un procédé de commande en fonctionnement du dispositif d'occultation 3, illustré aux figures 1 à 3, conforme à l'invention.

Le procédé de commande en fonctionnement du dispositif d'occultation 3 comprend une étape d'exécution E10 d'un déplacement de l'écran 2 par activation électrique de l'actionneur électromécanique 11.

Ici, le déplacement de l'écran 2 est exécuté initialement à une consigne de vitesse de rotation nominale Vn de l'arbre de sortie 20 de l'actionneur électromécanique 11.

Le procédé de commande en fonctionnement du dispositif d'occultation 3 comprend au moins les étapes suivantes, de préférence exécutées dans l'ordre mentionné ci-après :

- détermination E20 d'au moins une valeur d'une donnée P représentative de ou du fonctionnement du dispositif d'entraînement motorisé 5 au cours du déplacement de l'écran 2, lors de l'étape d'exécution E10, et
- comparaison E30 de la valeur de la donnée P, déterminée lors de l'étape de détermination E20, par rapport à au moins une valeur d'un premier seuil prédéterminé P_max.

En fonction du résultat, obtenu lors de l'étape de comparaison E30, le procédé comprend :

- une étape de diminution E40 de la consigne de vitesse de rotation V de l'arbre de sortie 20 de l'actionneur électromécanique 11 si la valeur de la donnée P, déterminée lors de l'étape de détermination E20, atteint ou dépasse la valeur du premier seuil prédéterminé P_max, autrement dit est supérieure ou égale à la valeur du premier seuil prédéterminé P_max, ou
- une étape de maintien E50 de la consigne de vitesse de rotation V de l'arbre de sortie 20 de l'actionneur électromécanique 11 tant que la valeur de la donnée P, déterminée lors de l'étape de détermination E20, est strictement inférieure à la valeur du premier seuil prédéterminé P_max.

L'étape de diminution E40 permet de réduire, autrement dit de limiter, la puissance électrique consommée par l'actionneur électromécanique 11, en particulier par le moteur électrique 16, cette puissance électrique provenant de la batterie 24. En outre, l'étape de maintien E50 permet de maintenir la puissance électrique consommée par l'actionneur électromécanique 11, autrement de conserver un même niveau de la puissance électrique consommée par l'actionneur électromécanique 11, en particulier par le moteur électrique 16, cette puissance électrique provenant de la batterie 24.

Ainsi, le procédé permet de commander l'actionneur électromécanique 11 de manière optimale en fonction de la vitesse de l'arbre de sortie 20, sans dépasser une puissance donnée pour chacun des éléments de stockage d'énergie 32 de la batterie 24.

De cette manière, le procédé permet de garantir une durée de vie de la batterie 24, d'optimiser un dimensionnement de la batterie 24 et, plus particulièrement, d'optimiser le nombre et la capacité de stockage d'énergie des éléments de stockage d'énergie 32 de la batterie 24.

En outre, un tel procédé peut permettre de minimiser le bruit du dispositif d'entraînement motorisé 5 et, plus particulièrement, du dispositif d'occultation 3 lors de l'activation électrique de l'actionneur électromécanique 11.

Par ailleurs, un tel procédé permet d'adapter automatiquement le fonctionnement de l'actionneur électromécanique 11 en fonction d'une donnée P représentative du fonctionnement du dispositif d'entraînement motorisé 5 au cours du déplacement de l'écran 2 et, plus particulièrement, sa puissance consommée.

Le procédé peut permettre ainsi de s'affranchir d'un apprentissage, au cours d'un ou plusieurs déplacements précédents de l'écran 2, de la variation de la donnée P représentative du fonctionnement du dispositif d'entraînement motorisé 5. Ceci évite de devoir déterminer une consigne spécifique de vitesse de rotation V de l'arbre de sortie 20 de l'actionneur électromécanique 11, cette consigne spécifique étant différente de la consigne de vitesse de rotation nominale Vn, au moins lors d'une phase de démarrage de l'actionneur électromécanique 11.

Dans le cas où la valeur de la donnée P, déterminée lors de l'étape de détermination E20, atteint ou dépasse la valeur du premier seuil prédéterminé P_max, la consigne de vitesse de rotation V de l'arbre de sortie 20 de l'actionneur électromécanique 11 est diminuée, au cours de l'étape d'exécution E10 d'un déplacement de l'écran 2.

Un ajustement de la consigne de vitesse de rotation V de l'arbre de sortie 20 de l'actionneur électromécanique 11, en particulier une diminution de celle-ci, lors de l'étape de diminution E40, par la détermination de la valeur de la donnée P, permet de s'affranchir de paramètres de l'environnement extérieur au dispositif d'entraînement motorisé 5, comme, par exemple, une température ambiante ou un vieillissement du dispositif d'occultation 3.

Avantageusement, l'exécution de l'étape de diminution E40 de la consigne de vitesse de rotation V de l'arbre de sortie 20 de l'actionneur électromécanique 11 permet d'empêcher que la valeur de la donnée P dépasse, pendant une période de temps de traitement par l'unité électronique de contrôle 15, en particulier d'exécution des étapes E20 à E40, la valeur du premier seuil prédéterminé P_max.

Tant que la valeur de la donnée P, déterminée lors de l'étape de détermination E20, est strictement inférieure à la valeur du premier seuil prédéterminé P_max, la consigne de vitesse de rotation V de l'arbre de sortie 20 de l'actionneur électromécanique 11 est maintenue soit à la consigne de vitesse de rotation nominale Vn soit à une consigne de vitesse de rotation V en cours, lors de l'étape d'exécution E10.

Ainsi, l'exécution de l'étape de maintien E50 permet de conserver la consigne de vitesse de rotation nominale Vn ou une consigne de vitesse de rotation V en cours, qui peut être définie suite à l'exécution d'une ou plusieurs itérations de l'étape de diminution E40.

Avantageusement, les étapes de détermination E20, de comparaison E30, de diminution E40 et de maintien E50 sont mises en œuvre par l'unité électronique de contrôle 15 et, plus particulièrement, par le microcontrôleur 31.

La donnée P représentative du fonctionnement du dispositif d'entraînement motorisé 5 est la puissance consommée par l'actionneur électromécanique 11 au cours du déplacement de l'écran 2, lors de l'étape d'exécution E10. Dans ce cas, la valeur du premier seuil prédéterminé P_max est une valeur d'un seuil prédéterminé de puissance.

Avantageusement, le procédé, en particulier ses étapes E20, E30, E40 et E50, est mis en œuvre dans le cas de l'exécution d'un déplacement de montée de l'écran 2, en particulier entre la deuxième position de fin de course FdCB, autrement la position de fin de course basse ou déroulée, et la première position de fin de course FdCH, autrement dit la position de fin de course haute ou enroulée.

Avantageusement, l'étape de détermination E20 est mise en œuvre entre les deuxième et première positions de fin de course FdCB, FdCH.

Avantageusement, l'étape de détermination E20, l'étape de comparaison E30 et l'étape de diminution E40 ou l'étape de maintien E50 sont mises en œuvre de manière itérative selon une période de temps prédéterminée T.

A titre d'exemple nullement limitatif, la période de temps prédéterminée T est de l'ordre de cinq millisecondes.

En variante, l'étape de détermination E20 est mise en œuvre de manière itérative à des instants définis en fonction de la position du rotor du moteur électrique 16. De même, en ce qui concerne l'étape de comparaison E30 et l'étape de diminution E40 ou l'étape de maintien E50.

A titre d'exemple nullement limitatif, les instants d'exécution de l'étape de détermination peuvent être dépendants d'un nombre de tours du rotor du moteur électrique 16 ou une fraction d'un tour du rotor du moteur électrique 16.

Ici, l'unité électronique de contrôle 15 comprend au moins un dispositif de mesure 37, 38. Le dispositif de mesure 37, 38 est configuré pour mesurer, autrement dit mesure, une grandeur U_Batterie et/ou I_Moteur représentative du fonctionnement du dispositif d'entraînement motorisé 5.

Dans le cas où la donnée P représentative du fonctionnement du dispositif d'entraînement motorisé 5 est la puissance consommée par l'actionneur électromécanique 11, l'unité électronique de contrôle 15 comprend un premier dispositif de mesure 37 et un deuxième dispositif de mesure 38. Le premier dispositif de mesure 37 est configuré pour mesurer, autrement dit mesure, une première grandeur U_Batterie représentative du fonctionnement de la batterie 24. La première grandeur U_Batterie représentative du fonctionnement de la batterie 24 est, par exemple, la tension de sortie de la batterie 24. En outre, le deuxième dispositif de mesure 38 est configuré pour mesurer, autrement dit mesure, une deuxième grandeur I_Moteur représentative du fonctionnement de l'actionneur électromécanique 11. La deuxième grandeur I_Moteur représentative du fonctionnement de l'actionneur électromécanique 11 est, par exemple, le courant consommé par le moteur électrique 16.

Avantageusement, la puissance consommée de l'actionneur électromécanique 11 peut être obtenue, notamment, par la formule suivante :

$$P = DC \times U\_Batterie \times I\_Moteur$$

où DC correspond à un rapport cyclique de commande du moteur électrique 16,

U_Batterie correspond à la tension de sortie de la batterie 24, et
I_Moteur correspond au courant consommé par le moteur électrique 16.

Avantageusement, l'unité électronique de contrôle 15, en particulier le microcontrôleur 31, comprend au moins une mémoire, non représentée. La ou les mémoires de l'unité électronique de contrôle 15 sont configurées pour stocker une ou plusieurs valeurs de la donnée P, déterminée lors de l'étape de détermination E20. En outre, la ou les mémoires de l'unité électronique de contrôle 15 sont configurées pour stocker une ou plusieurs valeurs de la ou des grandeurs U_Batterie, I_Moteur mesurées par le ou les dispositifs de mesure 37, 38.

Avantageusement, l'étape de détermination E20 de la valeur de la donnée P comprend une première sous-étape de mesure E201 d'au moins une valeur de la première grandeur U_Batterie et une deuxième sous-étape de mesure E202 d'au moins une valeur de la deuxième grandeur I_Moteur.

Avantageusement, l'étape de détermination E20 de la valeur de la donnée P comprend, en outre, une première sous-étape de mémorisation E203 d'au moins une valeur mesurée de la ou de chacune des grandeurs U_Batterie, I_Moteur, lors de la première ou deuxième sous-étape de mesure E201, E202, et une deuxième sous-étape de mémorisation E204 d'au moins une valeur de la donnée P, déterminée lors de l'étape de détermination E20.

Avantageusement, la tension de sortie U_Batterie de la batterie 24 est obtenue au moyen du premier dispositif de mesure 37, pouvant être, par exemple, un pont résistif. En outre, le courant I_Moteur consommé par le moteur électrique 16 est obtenu au moyen du deuxième dispositif de mesure 38, pouvant être, par exemple, une résistance de shunt. Chacune des valeurs issues du premier dispositif de mesure 37 et du deuxième dispositif de mesure 38 sont converties d'un signal analogique à un signal numérique au moyen d'un convertisseur analogique/numérique, non représenté, puis traitées par le microcontrôleur 31 de l'unité électronique de contrôle 15.

Ici, le convertisseur analogique/numérique est intégré au microcontrôleur 31.

En variante, non représentée, le convertisseur analogique/numérique est un élément distinct du microcontrôleur 31.

Avantageusement, le courant I_Moteur consommé par le moteur électrique 16 peut être une valeur instantanée, correspondant à un échantillon, ou une valeur moyenne, correspondant à une moyenne de plusieurs échantillons, pouvant être enregistrés, par exemple, dans une mémoire du microcontrôleur 31.

En variante, la donnée représentative du fonctionnement du dispositif d'entraînement motorisé 5 est le couple délivré par l'actionneur électromécanique 11 au cours du déplacement de l'écran 2, lors de l'étape d'exécution E10. Dans ce cas, la valeur du premier seuil prédéterminé est une valeur d'un seuil prédéterminé de couple.

Dans ce cas où la donnée P représentative du fonctionnement du dispositif d'entraînement motorisé 5 est le couple délivré par l'actionneur électromécanique 11, l'unité électronique de contrôle 15 comprend un seul dispositif de mesure 38. Le dispositif de mesure 38 est configuré pour mesurer une grandeur I_Moteur représentative du fonctionnement de l'actionneur électromécanique 11. La grandeur I_Moteur représentative du fonctionnement de l'actionneur électromécanique 11 est, par exemple, le courant consommé par le moteur électrique 16. Le dispositif de mesure 38 peut être identique au deuxième dispositif de mesure décrit ci-dessus, en référence au cas où la donnée P représentative du fonctionnement du dispositif d'entraînement motorisé 5 est la puissance consommée par l'actionneur électromécanique 11. Dans ce cas, il est considéré que le couple délivré par l'actionneur électromécanique 11 est corrélé, en particulier proportionnel, au courant consommé par le moteur électrique 16.

L'étape de diminution E40 de la consigne de vitesse de rotation V de l'arbre de sortie 20 de l'actionneur électromécanique 11 peut être mise en œuvre à plusieurs reprises et, plus particulièrement, à chaque fois que la valeur de la donnée P, déterminée lors de l'étape de détermination E20, atteint ou dépasse la valeur du premier seuil prédéterminé P_max, au cours de la mise en œuvre de l'étape d'exécution E10 d'un déplacement de l'écran 2.

L'étape de détermination E20, l'étape de comparaison E30 et l'étape de diminution E40 de la consigne de vitesse de rotation V de l'arbre de sortie 20 de l'actionneur électromécanique 11 sont mises en œuvre de manière itérative, comme représenté par la flèche de la figure 4 reliant l'étape E40 à l'étape E20, jusqu'à l'atteinte d'une valeur d'un deuxième seuil prédéterminé V_limitée.

Ainsi, dans le cas où la valeur de la donnée P, déterminée lors de l'étape de détermination E20, atteint ou dépasse la valeur du premier seuil prédéterminé P_max, la consigne de vitesse de rotation V de l'arbre de sortie 20 de l'actionneur électromécanique 11 est diminuée de manière itérative jusqu'à la valeur du deuxième seuil prédéterminé V_limitée, au cours de l'étape d'exécution E10 d'un déplacement de l'écran 2 par l'activation électrique de l'actionneur électromécanique 11.

Ici, le procédé permet de garantir une vitesse de déplacement constante de l'écran 2, au cours d'un déplacement de ce dernier par l'activation électrique de l'actionneur électromécanique 11, quelle que soit la position de l'écran 2 entre les deuxième et première positions de fin de course FdCB, FdCH, en particulier dans le cas d'un volet roulant ou d'un store enroulable où l'écran 2 est configuré pour s'enrouler autour du tube d'enroulement 4, lors d'un déplacement de montée de l'écran 2 de la deuxième position de fin de course FdCB vers la première position de fin de course FdCH.

Ici, la valeur du deuxième seuil prédéterminé V_limitée est une valeur d'un seuil prédéterminé de vitesse.

Avantageusement, suite à l'étape de diminution E40, si la valeur de la donnée P, déterminée lors de l'étape de détermination E20, est inférieure à la valeur du premier seuil prédéterminé P_max, la consigne de vitesse de rotation V de l'arbre de sortie 20 de l'actionneur électromécanique 11 est maintenue à la valeur du deuxième seuil prédéterminé V_limitée.

Avantageusement, le procédé comprend, en outre, une étape de sélection E60 de la valeur du premier seuil prédéterminé P_max parmi une pluralité de valeurs P_max1, P_max2, en fonction d'au moins une condition C.

Avantageusement, la condition C peut être une condition de fonctionnement de la batterie 24, par exemple l'âge ou l'état de charge de celle-ci, ou une condition climatique, par exemple une température à l'extérieur du bâtiment.

Avantageusement, l'étape de sélection E60 est mise en œuvre en fonction d'une combinaison de conditions C, par exemple une ou plusieurs conditions de fonctionnement de la batterie 24, telles que mentionnées ci-dessus, et une condition climatique, telle que mentionnée ci-dessus.

Ici, la valeur du premier seuil prédéterminé P_max est sélectionnée parmi deux valeurs P_max1, P_max2, une première valeur P_max1 dite nominale et une deuxième valeur P_max2 dite dégradée. En outre, la première valeur P_max1 est supérieure à la deuxième valeur P_max2.

Avantageusement, l'étape de sélection E60 est exécutée pendant la mise en œuvre de l'étape d'exécution E10 d'un déplacement de l'écran 2 et, plus particulièrement, au démarrage de l'étape d'exécution E10 d'un déplacement de l'écran 2.

Avantageusement, l'étape de sélection E60 est exécutée à chaque mise en œuvre de l'étape d'exécution E10 d'un déplacement de l'écran 2 par l'activation électrique de l'actionneur électromécanique 11.

Avantageusement, l'étape de sélection E60 est mise en œuvre avant l'étape de comparaison E30.

Avantageusement, l'étape de sélection E60 est mise en œuvre par l'unité électronique de contrôle 15 et, plus particulièrement, par le microcontrôleur 31 de l'unité électronique de contrôle 15.

Avantageusement, l'étape de sélection E60 comprend une sous-étape de détermination E601 d'au moins une valeur d'une grandeur U_Batterie représentative du fonctionnement de la batterie 24, en particulier la tension de sortie de la batterie 24, puis une sous-étape de comparaison E602 de la valeur de la grandeur U_Batterie, déterminée lors de la sous-étape de détermination E601, par rapport à au moins une valeur d'un troisième seuil prédéterminé U.

Ici, la sous-étape de détermination E601 est équivalente ou correspond à la première sous-étape de mesure E201, c'est-à-dire que les sous-étapes de détermination E601 et de mesure E201 peuvent être mises en œuvre par la même sous-étape pour les étapes de sélection E60 et de détermination E20. La valeur de la grandeur U_Batterie est déterminée par le premier dispositif de mesure 37. En outre, la valeur du troisième seuil prédéterminé U est une valeur d'un seuil prédéterminé de tension.

Avantageusement, la sous-étape de comparaison E602 est mise en œuvre tout au long du déplacement de l'écran 2, lors de l'étape d'exécution E10.

Avantageusement, un déplacement de l'écran 2, lors de l'étape d'exécution E10, est mis en œuvre initialement en utilisant la première valeur P_max1 du premier seuil prédéterminé P_max puis, en fonction du résultat de la sous-étape de comparaison E602, en utilisant la deuxième valeur P_max2 du premier seuil prédéterminé P_max si la valeur de la grandeur U_Batterie, déterminée lors de la sous-étape de détermination E601, est strictement inférieure à la valeur du troisième seuil prédéterminé U, ou en maintenant la première valeur P_max1 du premier seuil prédéterminé P_max si la valeur de la grandeur U_Batterie, déterminée lors de la sous-étape de détermination E601, est supérieure ou égale à la valeur du troisième seuil prédéterminé U.

En variante, non représentée, suite à l'atteinte de la valeur du deuxième seuil prédéterminé de vitesse V_limitée, le procédé met en œuvre une étape d'augmentation de la consigne de vitesse de rotation V de l'arbre de sortie 20 de l'actionneur électromécanique 11, en particulier jusqu'à la consigne de vitesse de rotation nominale Vn.

Une telle étape d'augmentation peut être mise en œuvre, notamment, dans le cas où le bruit généré par l'activation électrique de l'actionneur électromécanique 11 et/ou la variation de consigne de vitesse de rotation V de l'arbre de sortie 20 de l'actionneur électromécanique 11 ne sont pas perceptibles par l'utilisateur ou gênants pour ce dernier.

En variante, non représentée, dans le cas où la donnée P, déterminée lors de l'étape de détermination E20, atteint ou dépasse la valeur du premier seuil prédéterminé P_max, au cours d'un déplacement de l'écran 2, mis en œuvre lors de l'étape d'exécution E10, le procédé met en œuvre une étape de modification de la consigne de vitesse de rotation V de l'arbre de sortie 20 de l'actionneur électromécanique 11, de sorte à adapter la valeur de la consigne de vitesse de rotation V de l'arbre de sortie 20 de l'actionneur électromécanique 11 lors d'un déplacement de l'écran 2 suivant, mis en œuvre lors d'une nouvelle étape d'exécution E10.

Ainsi, une consigne de vitesse de rotation modifiée Vm de l'arbre de sortie 20 de l'actionneur électromécanique 11 est inférieure ou supérieure à une consigne de vitesse de rotation V0 initiale de l'arbre de sortie 20 de l'actionneur électromécanique 11, lors de la mise en œuvre du déplacement de l'écran 2 suivant.

De cette manière, la modification de la consigne de vitesse de rotation V de l'arbre de sortie 20 de l'actionneur électromécanique 11 pour un déplacement de l'écran 2 suivant, lors de l'exécution d'une nouvelle étape d'exécution E10, permet de minimiser, voire de supprimer, une perception de variation de la vitesse de rotation de l'arbre de sortie 20 de l'actionneur électromécanique 11, lors de la mise en œuvre du déplacement de l'écran 2 suivant.

Avantageusement, la consigne de vitesse de rotation modifiée Vm de l'arbre de sortie 20 de l'actionneur électromécanique 11 est déterminée en fonction de la vitesse de rotation minimale de l'arbre de sortie 20 de l'actionneur électromécanique 11, atteinte lors de la mise en œuvre du déplacement de l'écran 2, et, éventuellement, d'une période de temps déterminée pendant laquelle la vitesse de rotation de l'arbre de sortie 20 de l'actionneur électromécanique 11 a été inférieure à la consigne de vitesse de rotation V de l'arbre de sortie 20 de l'actionneur électromécanique 11, lors de la mise en œuvre du déplacement de l'écran 2.

En variante, non représentée, au cours d'un déplacement de l'écran 2, entre la deuxième position de fin de course FdCB et la première position de fin de course FdCH, mis en œuvre lors d'une première étape d'exécution E10, le procédé met en œuvre une étape de détermination d'une valeur de la donnée P maximale atteinte.

Cette valeur de la donnée P maximale déterminée est destinée à être utilisée au cours d'un déplacement suivant de l'écran 2, mis en œuvre lors d'une étape d'exécution E10 suivante, comme étant la valeur du premier seuil prédéterminé P_max.

Dans cette variante, l'étape de détermination E20 est appelée par la suite première étape de détermination. En outre, l'étape de détermination de la valeur de la donnée P maximale atteinte est appelée par la suite deuxième étape de détermination.

Avantageusement, le procédé comprend une première étape d'enregistrement de la valeur de la donnée P maximale, déterminée lors de la deuxième étape de détermination, en particulier dans une mémoire du microcontrôleur 31 de l'unité électronique de contrôle 15.

Le procédé comprend une troisième étape de détermination d'une position spécifique de l'écran 2, entre la deuxième position de fin de course FdCB et la première position de fin de course FdCH, pour laquelle la valeur de la donnée P maximale est déterminée, lors de la deuxième étape de détermination.

Avantageusement, la troisième étape de détermination de la position spécifique de l'écran 2 est mise en œuvre au moyen d'un dispositif de comptage, non représenté. En outre, le dispositif de comptage est configuré pour coopérer, autrement dit coopère, avec l'unité électronique de contrôle 15.

Avantageusement, le dispositif de comptage comprend au moins un capteur, en particulier de position.

Le nombre de capteurs du dispositif de comptage n'est pas limitatif et peut être égal à un, deux ou plus.

Dans un exemple de réalisation, le dispositif de comptage est de type magnétique, par exemple un encodeur équipé d'un ou plusieurs capteurs à effet Hall. Par ailleurs, le dispositif de comptage est configuré pour déterminer, autrement dit détermine, une position angulaire et/ou un nombre de tours effectués, à partir d'une position de référence, du rotor du moteur électrique 16.

En variante, non représentée, le dispositif de comptage est configuré pour déterminer, autrement dit détermine, une position angulaire et/ou un nombre de tours effectués, à partir d'une position de référence, de l'arbre de sortie 20 de l'actionneur électromécanique 11.

Le type du dispositif de comptage n'est pas limitatif et peut être différent. Ce dispositif de comptage peut, en particulier, être de type optique, par exemple un encodeur équipé d'un ou plusieurs capteurs optiques, ou de type temporel, par exemple une horloge du microcontrôleur 31.

Ici, le dispositif de comptage est configuré pour déterminer, autrement dit détermine, une position courante de l'écran 2 et/ou une atteinte de l'une des positions de fin de course haute FdCH et basse FdCB de l'écran 2.

Avantageusement, le procédé comprend une deuxième étape d'enregistrement de la position spécifique correspondant à la valeur de la donnée P maximale, déterminée lors de la troisième étape de détermination, en particulier dans une mémoire du microcontrôleur 31 de l'unité électronique de contrôle 15.

Le procédé comprend une quatrième étape de détermination d'une rampe d'accélération de la consigne de vitesse de rotation V de l'arbre de sortie 20 de l'actionneur électromécanique 11, à partir de la deuxième position de fin de course FdCB jusqu'à la position spécifique correspondant à la valeur de la donnée P maximale.

La rampe d'accélération est déterminée, lors de la quatrième étape de détermination, de sorte à atteindre la consigne de vitesse de rotation nominale Vn de l'arbre de sortie 20 de l'actionneur électromécanique 11 à l'instant où l'écran 2 atteint la position spécifique correspondant à la valeur de la donnée P maximale, déterminée lors de la troisième étape de détermination, lors d'un déplacement suivant de l'écran 2, mis en œuvre lors d'une étape d'exécution E10 suivante.

Lors d'une étape d'exécution E10 suivante, le déplacement de l'écran 2 est mis en œuvre en suivant la rampe d'accélération, déterminée lors de la quatrième étape de détermination.

Ainsi, la valeur de la donnée P maximale atteinte est déterminée lors de l'exécution d'un déplacement de montée de l'écran 2 et la rampe d'accélération de la consigne de vitesse de rotation V de l'arbre de sortie 20 de l'actionneur électromécanique 11 est calculée en fonction des caractéristiques du dispositif d'occultation 3.

De cette manière, une variation brusque de la vitesse de déplacement de l'écran 2 est moins perceptible par l'utilisateur, lors de la mise en œuvre de l'étape d'exécution E10 suivante, dans le cas où l'étape de diminution E40 est exécutée, c'est-à-dire lors du franchissement de la position correspondant à la valeur de la donnée P maximale.

En variante, non représentée, le procédé comprend, au cours de l'étape d'exécution E10, pouvant être la première étape d'exécution envisagée ci-dessus, l'une des étapes d'exécution suivantes ou chacune des étapes d'exécution suivantes, une étape de mesure d'au moins une valeur de la tension de sortie U_Batterie de la batterie 24, en particulier lors de la mise en œuvre de la rampe d'accélération, déterminée lors de la quatrième étape de détermination.

Ici, l'étape de mesure est mise en œuvre au moyen du premier dispositif de mesure 37.

En outre, le procédé comprend une étape de comparaison de la valeur de la tension de sortie U_Batterie mesurée, lors de l'étape de mesure, par rapport à une valeur d'un quatrième seuil prédéterminé U_min.

Dans cette variante, l'étape de comparaison E30 correspond à une première étape de comparaison. En outre, l'étape de comparaison de la valeur de la tension de sortie U_Batterie mesurée est appelée par la suite deuxième étape de comparaison.

Avantageusement, la deuxième étape de comparaison est mise en œuvre tout au long du déplacement de l'écran 2, lors de l'étape d'exécution E10.

En fonction du résultat, obtenu lors de la deuxième étape de comparaison, le procédé met en œuvre une étape de modification de la valeur du premier seuil prédéterminé P_max si la valeur de la tension de sortie U_Batterie, mesurée lors de l'étape de mesure, est strictement inférieure à la valeur du quatrième seuil prédéterminé U_min, ou une étape de maintien de la valeur du premier seuil prédéterminé P_max tant que la valeur de la tension de sortie U_Batterie, mesurée lors de l'étape de mesure, est supérieure ou égale à la valeur du quatrième seuil prédéterminé U_min.

Avantageusement, les deuxième, troisième et quatrième étapes de détermination, l'étape de mesure et la deuxième étape de comparaison sont mises en œuvre par l'unité électronique de contrôle 15 et, plus particulièrement, par le microcontrôleur 31.

Grâce à la présente invention, quel que soit le mode de réalisation, le procédé permet de commander l'actionneur électromécanique de manière optimale en fonction de la vitesse de l'arbre de sortie, sans dépasser une puissance donnée pour chacun des éléments de stockage d'énergie de la batterie destinée à alimenter en énergie électrique le moteur électrique de l'actionneur électromécanique et l'unité électronique de contrôle du dispositif d'entraînement motorisé.

De cette manière, le procédé permet de garantir une durée de vie de la batterie, d'optimiser un dimensionnement de la batterie et, plus particulièrement, d'optimiser le nombre et la capacité de stockage d'énergie des éléments de stockage d'énergie de la batterie.

En outre, un tel procédé peut permettre de minimiser le bruit du dispositif d'entraînement motorisé et, plus particulièrement, du dispositif d'occultation lors de l'activation électrique de l'actionneur électromécanique.

Par ailleurs, un tel procédé permet d'adapter automatiquement le fonctionnement de l'actionneur électromécanique en fonction d'une donnée représentative du fonctionnement du dispositif d'entraînement motorisé au cours du déplacement de l'écran et, plus particulièrement, sa puissance consommée.

Le procédé peut permettre ainsi de s'affranchir d'un apprentissage, au cours d'un ou plusieurs déplacements précédents de l'écran, de la variation de la donnée représentative du fonctionnement du dispositif d'entraînement motorisé. Ceci évite de devoir déterminer une consigne spécifique de vitesse de rotation de l'arbre de sortie de l'actionneur électromécanique, cette consigne spécifique étant différente de la consigne de vitesse de rotation nominale, au moins lors d'une phase de démarrage de l'actionneur électromécanique.

De nombreuses modifications peuvent être apportées aux exemples de réalisation décrits précédemment, sans sortir du cadre de l'invention défini par les revendications ci-annexées.

En variante, non représentée, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme la source d'alimentation en énergie électrique externe 25 ou une source d'alimentation en énergie électrique externe additionnelle.

En variante, non représentée, la source d'alimentation en énergie électrique externe 25 est une batterie auxiliaire, prévue pour recharger la batterie 24. Ainsi, la batterie 24 peut être rechargée au moyen de la batterie auxiliaire formant la source d'alimentation en énergie électrique externe 25, en particulier dans le cas où le dispositif d'occultation 3 est éloigné d'une prise électrique murale. En outre, la batterie auxiliaire formant la source d'alimentation en énergie électrique externe peut permettre de recharger une batterie d'autres équipements électriques, notamment nomades, tels que, par exemple, un téléphone portable ou un ordinateur portable. Par ailleurs, une telle batterie auxiliaire, formant la source d'alimentation en énergie électrique externe 25, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

En variante, non représentée, l'actionneur électromécanique 11 est inséré dans un rail, en particulier de section carrée ou rectangulaire, pouvant être ouvert à l'une ou à ses deux extrémités, dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2.

En variante, le moteur électrique 16 de l'actionneur électromécanique 11 peut être du type asynchrone ou à courant continu.

En outre, les modes de réalisation et variantes envisagés peuvent être combinés pour générer de nouveaux modes de réalisation de l'invention, sans sortir du cadre de l'invention défini par les revendications ci-annexées.

**Revendications**

1. Procédé de commande en fonctionnement d'un dispositif d'occultation (3),

le dispositif d'occultation (3) comprenant au moins :

- un écran (2), et
- un dispositif d'entraînement motorisé (5),

le dispositif d'entraînement motorisé (5) comprenant au moins :

- un actionneur électromécanique (11), l'actionneur électromécanique (11) étant configuré pour entraîner en déplacement l'écran (2), entre une première position de fin de course (FdCH) et une deuxième position de fin de course (FdCB), et inversement,
- une unité électronique de contrôle (15), et
- un dispositif d'alimentation en énergie électrique (26),

l'actionneur électromécanique (11) comprenant au moins :

- un moteur électrique (16), et
- un arbre de sortie (20),

le dispositif d'alimentation en énergie électrique (26) comprenant au moins :

- une batterie (24), la batterie (24) comprenant une pluralité d'éléments de stockage d'énergie (32), l'unité électronique de contrôle (15) et le moteur électrique (16) étant alimentés en énergie électrique au moyen de la batterie (24),

l'unité électronique de contrôle (15) comprenant au moins :

- un dispositif de mesure (37, 38), le dispositif de mesure (37, 38) étant configuré pour mesurer une grandeur (U_Batterie, I_Moteur) représentative du fonctionnement du dispositif d'entraînement motorisé (5),

le procédé comprenant au moins les étapes suivantes :

- exécution (E10) d'un déplacement de l'écran (2) par activation électrique de l'actionneur électromécanique (11),
- détermination (E20) d'au moins une valeur d'une donnée (P), au moyen du dispositif de mesure (37, 38), représentative du fonctionnement du dispositif d'entraînement motorisé (5) au cours du déplacement de l'écran (2), lors de l'étape d'exécution (E10), la donnée (P) étant la puissance consommée par l'actionneur électromécanique (11) ou le couple délivré par l'actionneur électromécanique (11) au cours du déplacement de l'écran (2), lors de l'étape d'exécution (E10),

- comparaison (E30) de la valeur de la donnée (P), déterminée lors de l'étape de détermination (E20), par rapport à au moins une valeur d'un premier seuil prédéterminé (P_max),

- en fonction du résultat, obtenu lors de l'étape de comparaison (E30), diminution (E40) de la consigne de vitesse de rotation (V) de l'arbre de sortie (20) de l'actionneur électromécanique (11) si la valeur de la donnée (P), déterminée lors de l'étape de détermination (E20), atteint ou dépasse la valeur du premier seuil prédéterminé (P_max), de sorte à réduire une puissance électrique consommée par l'actionneur électromécanique (11) provenant de la batterie (24), ou maintien (E50) de la consigne de vitesse de rotation (V) de l'arbre de sortie (20) de l'actionneur électromécanique (11) tant que la valeur de la donnée (P), déterminée lors de l'étape de détermination (E20), est inférieure à la valeur du premier seuil prédéterminé (P_max),

l'étape de détermination (E20), l'étape de comparaison (E30) et l'étape de diminution (E40) de la consigne de vitesse de rotation (V) de l'arbre de sortie (20) de l'actionneur électromécanique (11) étant mises en œuvre de manière itérative jusqu'à l'atteinte d'une valeur d'un deuxième seuil prédéterminé (V_limitée), et la valeur du deuxième seuil prédéterminé (V_limitée) étant une valeur d'un seuil prédéterminé de vitesse.

**2.** Procédé de commande en fonctionnement d'un dispositif d'occultation (3) selon la revendication 1, **caractérisé en ce que** l'étape de détermination (E20), l'étape de comparaison (E30) et l'étape de diminution (E40) ou l'étape de maintien (E50) sont mises en œuvre de manière itérative selon une période de temps prédéterminée (T).

**3.** Procédé de commande en fonctionnement d'un dispositif d'occultation (3) selon la revendication 1 ou selon la revendication 2, **caractérisé en ce que**, suite à l'étape de diminution (E40), si la valeur de la donnée (P), déterminée lors de l'étape de détermination (E20), est inférieure à la valeur du premier seuil prédéterminé (P_max), la consigne de vitesse de rotation (V) de l'arbre de sortie (20) de l'actionneur électromécanique (11) est maintenue à la valeur du deuxième seuil prédéterminé (V_limitée).

**4.** Procédé de commande en fonctionnement d'un dispositif d'occultation (3) selon la revendication 1 ou selon la revendication 2, **caractérisé en ce que**, suite à l'atteinte de la valeur du deuxième du seuil prédéterminé de vitesse (V_limitée), le procédé met en œuvre une étape d'augmentation de la consigne de vitesse de rotation (V) de l'arbre de sortie (20) de l'actionneur électromécanique (11).

**5.** Procédé de commande en fonctionnement d'un dispositif d'occultation (3) selon la revendication 1 ou selon la revendication 2, **caractérisé en ce que**, dans le cas où la donnée (P), déterminée lors de l'étape de détermination (E20), atteint ou dépasse la valeur du premier seuil prédéterminé (P_max), au cours d'un déplacement de l'écran (2), mis en œuvre lors de l'étape d'exécution (E10), le procédé met en œuvre une étape de modification de la consigne de vitesse de rotation (V) de l'arbre de sortie (20) de l'actionneur électromécanique (11), de sorte à adapter la valeur de la consigne de vitesse (V) de rotation de l'arbre de sortie (20) de l'actionneur électromécanique (11) lors d'un déplacement de l'écran (2) suivant, mis en œuvre lors d'une nouvelle étape d'exécution (E10).

**6.** Procédé de commande en fonctionnement d'un dispositif d'occultation (3) selon l'une quelconque des revendications 1 à 5, **caractérisé en ce que** le procédé comprend, en outre, une étape de sélection (E60) de la valeur du premier seuil prédéterminé (P_max) parmi une pluralité de valeurs (P_max1, P_max2), en fonction d'au moins une condition (C).

**7.** Procédé de commande en fonctionnement d'un dispositif d'occultation (3) selon l'une quelconque des revendications 1 à 6, **caractérisé en ce que** le procédé est mis en œuvre dans le cas de l'exécution d'un déplacement de montée de l'écran (2).

**8.** Dispositif d'occultation (3) comprenant au moins :

- un écran (2), et
- un dispositif d'entraînement motorisé (5), le dispositif d'entraînement motorisé (5) comprenant au moins :

- un actionneur électromécanique (11), l'actionneur électromécanique (11) étant configuré pour entraîner en déplacement l'écran (2), entre une première position de fin de course (FdCH) et une deuxième position de fin de course (FdCB), et inversement,
- une unité électronique de contrôle (15), et
- un dispositif d'alimentation en énergie électrique (26),

l'actionneur électromécanique (11) comprenant au moins :

- un moteur électrique (16), et
- un arbre de sortie (20),

le dispositif d'alimentation en énergie électrique (26) comprenant au moins :

- une batterie (24), la batterie (24) comprenant une pluralité d'éléments de stockage d'énergie (32), l'unité électronique de contrôle (15) et le moteur électrique (16) étant alimentés en énergie électrique au moyen de la batterie (24),

l'unité électronique de contrôle (15) comprenant au moins :

- un dispositif de mesure (37, 38), le dispositif de mesure (37, 38) étant configuré pour mesurer une grandeur (U_Batterie, I_Moteur) représentative du fonctionnement du dispositif d'entraînement motorisé (5),

**caractérisé en ce que** l'unité électronique de contrôle (15) est configurée pour mettre en œuvre le procédé selon l'une quelconque des revendications 1 à 7.

9. Dispositif d'occultation (3) selon la revendication 8, **caractérisé**

**en ce que** le dispositif d'alimentation en énergie électrique (26) comprend, en outre, au moins un panneau photovoltaïque (25),
et **en ce que** la batterie (24) est alimentée en énergie électrique au moyen du panneau photovoltaïque (25).

10. Dispositif d'occultation (3) selon la revendication 8 ou selon la revendication 9, **caractérisé**

**en ce que** le dispositif d'occultation (3) comprend, en outre, un tube d'enroulement (4),
**en ce que** l'écran (2) est enroulable sur le tube d'enroulement (4),
et **en ce que** le tube d'enroulement (4) est agencé de sorte à être entraîné en rotation par l'actionneur électromécanique (11).

**Patentansprüche**

1. Steuerungsverfahren im Betrieb einer Verdunkelungsvorrichtung (3),

die Verdunkelungsvorrichtung (3) mindestens umfassend:

- eine Blende (2), und
- eine motorisierte Antriebsvorrichtung (5),

die motorisierte Antriebsvorrichtung (5) mindestens umfassend:

- einen elektromechanischen Aktuator (11), wobei der elektromechanische Aktuator (11) konfiguriert ist, um die Blende (2) zwischen einer ersten Endlage (FdCH) und einer zweiten Endlage (FdCB) und umgekehrt bewegbar anzutreiben,
- eine elektronische Steuereinheit (15), und
- eine Versorgungsvorrichtung elektrischer Energie (26),

der elektromechanische Aktuator (11) mindestens umfassend:

- einen Elektromotor (16), und
- eine Ausgangswelle (20),

die Versorgungsvorrichtung elektrischer Energie (26) mindestens umfassend:

- eine Batterie (24), die Batterie (24) umfassend eine Vielzahl von Energiespeicherelementen (32), wobei die elektronische Steuereinheit (15) und der Elektromotor (16) mittels der Batterie (24) mit elektrischer Energie versorgt werden,

die elektronische Steuereinheit (15) mindestens umfassend:

- eine Messvorrichtung (37, 38), wobei die Messvorrichtung (37, 38) konfiguriert ist, um eine Größe (U_Batterie, I_Motor) zu messen, die repräsentativ für den Betrieb der motorisierten Antriebsvorrichtung (5) ist,

das Verfahren umfassend mindestens die folgenden Schritte:

- Ausführen (E10) einer Bewegung der Blende (2) durch elektrische Aktivierung des elektromechanischen Aktuators (11),
- Bestimmen (E20) mindestens eines Werts von Daten (P) mittels der Messvorrichtung (37, 38), die repräsentativ für den Betrieb der motorisierten Antriebsvorrichtung (5) im Verlauf der Bewegung der Blende (2) während des Ausführungsschritts (E10) sind, wobei die Daten (P) die von dem elektromechanischen Aktuator (11) aufgenommene Leistung oder das von dem elektromechanischen Aktuator (11) im Verlauf der Bewegung der Blende (2) während des Ausführungsschritts (E10) bereitgestellte Drehmoment ist,

- Vergleichen (E30) des Werts der Daten (P), die bei dem Bestimmungsschritt (E20) bestimmt werden, mit mindestens einem Wert eines ersten vorbestimmten Schwellenwerts (P_max),

- abhängig von dem bei dem Vergleichsschritt (E30) erlangten Resultat, Verringern (E40) der Drehgeschwindigkeitsvorgabe (V) der Ausgangswelle (20) des elektromechanischen Aktuators (11), wenn der Wert der bei dem Bestimmungsschritt (E20) bestimmten Daten (P) den Wert des ersten vorbestimmten Schwellenwerts (P_max) erreicht oder überschreitet, um eine von dem elektromechanischen Aktuator (11) aufgenommene elektrische Leistung aus der Batterie (24) zu reduzieren, oder Beibehalten (E50) der Drehgeschwindigkeitsvorgabe (V) der Ausgangswelle (20) des elektromechanischen Aktuators (11), solange der Wert der bei dem Bestimmungsschritt (E20) bestimmten Daten (P) kleiner ist als der Wert des ersten vorbestimmten Schwellenwerts (P_max),

wobei der Bestimmungsschritt (E20), der Vergleichsschritt (E30) und der Verringerungsschritt (E40) der Drehgeschwindigkeitsvorgabe (V) der Abtriebswelle (20) des elektromechanischen Aktuators (11) iterativ durchgeführt werden, bis ein Wert eines zweiten vorbestimmten Schwellenwerts (V begrenzt) erreicht wird, und der Wert des zweiten vorbestimmten Schwellenwerts (V begrenzt) ein Wert eines vorbestimmten Geschwindigkeitsschwellenwerts ist.

**2.** Steuerungsverfahren im Betrieb einer Verdunkelungsvorrichtung (3) nach Anspruch 1, **dadurch gekennzeichnet, dass** der Bestimmungsschritt (E20), der Vergleichsschritt (E30) und der Verringerungsschritt (E40) oder der Beibehaltungsschritt (E50) iterativ über eine vorbestimmte Zeitdauer (T) durchgeführt werden.

**3.** Steuerungsverfahren im Betrieb einer Verdunkelungsvorrichtung (3) nach Anspruch 1 oder nach Anspruch 2, **dadurch gekennzeichnet, dass** im Anschluss an den Verringerungsschritt (E40), wenn der Wert der Daten (P), die bei dem Bestimmungsschritt (E20) bestimmt werden, kleiner ist als der Wert des ersten vorbestimmten Schwellenwerts (P_max), die Drehgeschwindigkeitsvorgabe (V) der Abtriebswelle (20) des elektromechanischen Aktuators (11) auf dem Wert des zweiten vorbestimmten Schwellenwerts (V_begrenzt) gehalten wird.

**4.** Steuerungsverfahren im Betrieb einer Verdunkelungsvorrichtung (3) nach Anspruch 1 oder nach Anspruch 2, **dadurch gekennzeichnet, dass** das Verfahren nach Erreichen des Werts des zweiten von dem vorbestimmten Geschwindigkeitsschwellenwert (V_begrenzt) einen Erhöhungsschritt der Drehgeschwindigkeitsvorgabe (V) der Abtriebswelle (20) des elektromechanischen Aktuators (11) durchführt.

**5.** Steuerungsverfahren im Betrieb einer Verdunkelungsvorrichtung (3) nach Anspruch 1 oder nach Anspruch 2, **dadurch gekennzeichnet, dass** für den Fall, dass die bei dem Bestimmungsschritt (E20) bestimmten Daten (P) den Wert des ersten vorbestimmten Schwellenwerts (P_max) erreichen oder überschreiten, im Verlauf einer Bewegung der Blende (2), die bei dem Ausführungsschritt (E10) durchgeführt wird, das Verfahren einen Änderungsschritt der Drehgeschwindigkeitsvorgabe (V) der Ausgangswelle (20) des elektromechanischen Aktuators (11) implementiert, um den Wert der Drehgeschwindigkeitsvorgabe (V) der Ausgangswelle (20) des elektromechanischen Aktuators (11) bei einer nächsten Bewegung der Blende (2), die bei einem neuen Ausführungsschritt (E10) implementiert wird, anzupassen.

**6.** Steuerungsverfahren im Betrieb einer Verdunkelungsvorrichtung (3) nach einem der Ansprüche 1 bis 5, **dadurch gekennzeichnet, dass** das Verfahren ferner einen Auswahlschritt (E60) des Werts des ersten vorbestimmten Schwellenwerts (P_max) aus einer Vielzahl von Werten (P_max1, P_max2) abhängig von mindestens einer Bedingung (C) umfasst.

**7.** Steuerungsverfahren im Betrieb einer Verdunkelungsvorrichtung (3) nach einem der Ansprüche 1 bis 6, **dadurch gekennzeichnet, dass** das Verfahren im Fall einer Ausführung einer Aufwärtsbewegung der Blende (2) durchgeführt wird.

**8.** Verdunkelungsvorrichtung (3), mindestens umfassend:

   - eine Blende (2), und
   - eine motorisierte Antriebsvorrichtung (5),

die motorisierte Antriebsvorrichtung (5) mindestens umfassend:

- einen elektromechanischen Aktuator (11), wobei der elektromechanische Aktuator (11) konfiguriert ist, um die Blende (2) zwischen einer ersten Endlage (FdCH) und einer zweiten Endlage (FdCB) und umgekehrt bewegbar anzutreiben,
- eine elektronische Steuereinheit (15), und
- eine Versorgungsvorrichtung elektrischer Energie (26),

der elektromechanische Aktuator (11) mindestens umfassend:

- einen Elektromotor (16), und
- eine Ausgangswelle (20),

die Versorgungsvorrichtung elektrischer Energie (26) mindestens umfassend:

- eine Batterie (24), die Batterie (24) umfassend eine Vielzahl von Energiespeicherelementen (32), wobei die elektronische Steuereinheit (15) und der Elektromotor (16) mittels der Batterie (24) mit elektrischer Energie versorgt werden,

die elektronische Steuereinheit (15) mindestens umfassend:

- eine Messvorrichtung (37, 38), wobei die Messvorrichtung (37, 38) konfiguriert ist, um eine Größe (U_Batterie, I_Motor) zu messen, die repräsentativ für den Betrieb der motorisierten Antriebsvorrichtung (5) ist,

**dadurch gekennzeichnet, dass** die elektronische Steuereinheit (15) konfiguriert ist, um das Verfahren nach einem der Ansprüche 1 bis 7 durchzuführen.

9. Verdunkelungsvorrichtung (3) nach Anspruch 8, **dadurch gekennzeichnet,**

**dass** die elektrische Energieversorgungseinrichtung (26) ferner mindestens ein photovoltaisches Panel (25) umfasst,
und **dass** die Batterie (24) mittels des photovoltaischen Panels (25) mit elektrischer Energie versorgt wird.

10. Verdunkelungsvorrichtung (3) nach Anspruch 8 oder Anspruch 9, **dadurch gekennzeichnet,**

**dass** die Verdunkelungsvorrichtung (3) ferner ein Wickelrohr (4) umfasst,
**dass** die Blende (2) auf das Wickelrohr (4) aufwickelbar ist,
wobei das Wickelrohr (4) angeordnet ist, um durch den elektromechanischen Stellantrieb (11) in Drehung versetzt zu werden.

## Claims

1. A method for controlling the operation of a shading device (3),

the shading device (3) comprising at least:

- a screen (2), and
- a motorised drive device (5),

the motorised drive device (5) comprising at least:

- an electromechanical actuator (11), the electromechanical actuator (11) being configured to move the screen (2), between a first end-of-travel position (FdCH) and a second end-of-travel position (FdCB), and vice versa,
- an electronic control unit (15), and
- an electrical energy supply device (26),

the electromechanical actuator (11) comprising at least:

- an electric motor (16), and
- an output shaft (20),

the electrical energy supply device (26) comprising at least:

- a battery (24), the battery (24) comprising a plurality of energy storage elements (32), the electronic control unit (15) and the electric motor (16) being supplied with electrical energy by means of the battery (24),

the electronic control unit (15) comprising at least:

- a measuring device (37, 38), the measuring device (37, 38) being configured to measure a quantity (U_Batterie, I_Moteur) representative of the operation of the motorised drive device (5),

the method comprising at least the following steps:

- executing (E10) a movement of the screen (2) by electrical activation of the electromechanical actuator (11),

- determining (E20) at least one value of data (P), by means of the measuring device (37, 38), representative of the operation of the motorised drive device (5) during the movement of the screen (2), during the step of executing (E10), the data (P) being the power consumed by the electromechanical actuator (11) or the torque delivered by the electromechanical actuator (11) during the movement of the screen (2), during the step of executing (E10),

- comparing (E30) the value of data (P), determined during the step of determining (E20), with respect to at least one value of a first predetermined threshold (P_max),

- depending on the result, obtained during the step of comparing (E30), reducing (E40) a rotational speed setpoint (V) of the output shaft (20) of the electromechanical actuator (11) if the value of data (P), determined during the step of determining (E20), is equal to or exceeds the value of the first predetermined threshold (P_max), so as to reduce an electric power consumed by the electromechanical actuator (11) from the battery (24), or maintaining (E50) the rotational speed setpoint (V) of the output shaft (20) of the electromechanical actuator (11) as long as the value of data (P), determined during the step of determining (E20), is lower than the value of the first predetermined threshold (P_Max),

the step of determining (E20), the step of comparing (E30) and the step of reducing (E40) the rotational speed setpoint (V) of the output shaft (20) of the electromechanical actuator (11) being implemented iteratively until a value of a second predetermined threshold (V_limitée) is reached, and
the value of the second predetermined threshold (V_limitée) being a value of a predetermined speed threshold.

2. The method for controlling the operation of a shading device (3) according to claim 1, **characterised in that** the step of determining (E20), the step of comparing (E30) and the step of reducing (E40) or the step of maintaining (E50) are implemented iteratively according to a predetermined time period (T).

3. The method for controlling the operation of a shading device (3) according to claim 1 or according to claim 2, **characterised in that**, following the step of reducing (E40), if the value of data (P), determined during the step of determining (E20), is less than the value of the first predetermined threshold (P_max), the rotational speed setpoint (V) of the output shaft (20) of the electromechanical actuator (11) is maintained at the value of the second predetermined threshold (V_limitée).

4. The method for controlling the operation of a shading device (3) according to claim 1 or according to claim 2, **characterised in that**, upon reaching the value of the second predetermined speed threshold (V_limitée), the method implements a step of increasing the rotational speed setpoint (V) of the output shaft (20) of the electromechanical actuator (11).

5. The method for controlling the operation of a shading device (3) according to claim 1 or according to claim 2, **characterised in that**, in the case where the data (P), determined during the step of determining (E20), is equal to or exceeds the value of the first predetermined threshold (P_max), during a movement of the screen (2), implemented during the step of executing (E10), the method implements a step of modifying the rotational speed setpoint (V) of the output shaft (20) of the electromechanical actuator (11), so as to adapt the value of the rotational speed setpoint (V) of the output shaft (20) of the electromechanical actuator (11) during a subsequent movement of the screen (2), implemented during a new step of executing (E10).

6. The method for controlling the operation of a shading device (3) according to any one of claims 1 to 5, **characterised in that** the method further comprises a step of selecting (E60) the value of the first predetermined threshold (P_max) from a plurality of values (P_max1, P_max2), depending on at least one condition (C).

7. The method for controlling the operation of a shading device (3) according to any one of claims 1 to 6, **characterised in that** the method is implemented in the case of executing an upward movement of the screen (2).

8. A shading device (3) comprising at least:

   - a screen (2), and
   - a motorised drive device (5),
   the motorised drive device (5) comprising at least:

      - an electromechanical actuator (11), the electromechanical actuator (11) being configured to move the screen (2), between a first end-of-travel position (FdCH) and a second end-of-travel position (FdCB), and vice versa,
      - an electronic control unit (15), and

- an electrical energy supply device (26),

the electromechanical actuator (11) comprising at least:

- an electric motor (16), and
- an output shaft (20),

the electrical energy supply device (26) comprising at least:

- a battery (24), the battery (24) comprising a plurality of energy storage elements (32), the electronic control unit (15) and the electric motor (16) being supplied with electrical energy by means of the battery (24),

the electronic control unit (15) comprising at least:

- a measuring device (37, 38), the measuring device (37, 38) being configured to measure a quantity (U_Batterie, I_Moteur) representative of the operation of the motorised drive device (5),

**characterised in that** the electronic control unit (15) is configured to implement the method according to any one of claims 1 to 7.

9. The shading device (3) according to claim 8, **characterised**

    **in that** the electrical energy supply device (26) further comprises at least a photovoltaic panel (25),
    and **in that** the battery (24) is supplied with electrical energy by means of the photovoltaic panel (25).

10. The shading device (3) according to claim 8 or according to claim 9, **characterised in that** the shading device (3) further comprises a winding tube (4),

    **in that** the screen (2) can be rolled onto the winding tube (4),
    and **in that** the winding tube (4) is arranged to be rotated by the electromechanical actuator (11).

Fig.1

Fig.2

Fig.3

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H0828162 B
- US 20150159433 A1
- FR 2894278 A1
- FR 3093124 A1